# EUROPEAN PATENT APPLICATION

(11) **EP 4 607 449 A2**
(43) Date of publication of application: **27.08.2025**
(21) Application number: 25159093.1
(22) Date of filing: 20.02.2025
(51) Int. Cl.: G06Q 50/40

(54) **A CLOUD-BASED DRIVING SCORE REPORT GENERATING SYSTEM AND METHOD THEREOF**

(30) Priority: 23.02.2024 IN 202441013116; 12.06.2024 GB 202408379
(71) Applicant: Continental Automotive Technologies GmbH, 30175 Hannover (DE)
(72) Inventor: John, Jayan, 560099 Bangalore (IN)
(74) Representative: Aumovio Corporation

(57) **Abstract**

Disclosure relates to a driving score generating system. The system comprises a driving environment, one or more sensing devices within the driving environment and a processor comprising an artificial neural network. The processor may be operable to generate and execute a plurality of instructions stored thereon. The processor may be further operable to receive sensing information from the one or more sensing device and generate a driving score report in response to the sensing information received from the one or more sensing devices. The driving score report comprises a driving style score rating and an eco-friendliness score rating. A cloud-based data sharing system and a method of generating a driving score report is also disclosed.

## Description

### TECHNICAL FIELD

This disclosure relates to the field of communication technologies and in particular a cloud-based driving score report generating system for a motor vehicle operator using artificial intelligence and machine learning processing, to allocate a score for a motor vehicle operator that may be shared with the motor vehicle operator or service providers.

### BACKGROUND

Conventional driver score rating systems uses sensing information that are restricted to on-board sensors within motor vehicles. Current data analysis focuses on vehicle network data related to vehicle trajectory such as travelling speed, rate of acceleration to determine how a motor vehicle is operated. There is little or no processing of inertial measurement unit (IMU) sensors and no fusion of data from driver behaviour inputs from cameras, wearables and personal devices. This lack of data is detrimental to the accuracy of predicting driver's behaviour or driving style.

In addition, existing scoring calculations are based on conventional algorithms that cannot easily scale up to increasing amount of data inputs/ sensors in the car. Therefore, existing systems and algorithms are not scalable, and it is not possible to merely include more sources of sensing information sources in existing systems to yield accurate results. Notwithstanding the above, such analysis on driver behaviour and driving style are also beneficial for businesses of sharing economy.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

A purpose of this disclosure is to ameliorate the problem as discussed in the background section, by providing the subject-matter of the independent claims.

Further purposes of this disclosure are set out in the accompanying dependent claims.

In an aspect of this disclosure, a driving score report generating system is provided. The driving score report generating system may comprises a driving environment, one or more sensing devices within the driving environment and a processor comprising an artificial neural network. The processor may be operable to generate and execute a plurality of instructions stored thereon. The processor may be further operable to receive sensing information from the one or more sensing device. The processor may be further operable to generate a driving score report in response to the sensing information received from the one or more sensing devices. The driving score report may comprises a driving style score rating and an eco-friendliness score rating.

Advantageously, the driving score report generating system executes an algorithm to process and generate a motor vehicle operator driving score report associated with the sensing information collected from within the driving environment to generate a report indicative of an operator's driving style and eco-friendliness score rating using artificial intelligence and machine learning to enhance speed of calculation and improve accuracy of score rating.

In some embodiment, the processor may be operable to transmit an information data containing the driving score report to a driving score report server through a wireless communication network. The driving score report server may be operable to store the information data containing the driving score report received through wireless communication network. The driving score report server may be operable to retrieve the information data containing the driving score report in response to one or more input by a requestor.

Advantageously, the score generating system may be in wireless communication with a wireless network, such that reports generated may be shared with service providers.

In some embodiment, the sensing information acquired by the processor may comprises an operation dataset comprising vehicle operation data in relation to the driving environment. In some embodiment, the sensing information acquired by the processor may comprises an operator health dataset comprising health data in relation to an operator operating in the driving environment.

Advantageously, the system process and analyse multiple sensing information from different sources. The sources of sensing information may be from in-vehicle sensing device or from wearable worn by an operator.

In some embodiment, the processor may be further operable to execute the plurality of instructions to cause the artificial neural network to perform a machine learning process to obtain a set of segmentized parameters for processing the driving scoring driving style score rating and the eco-friendliness score rating.

In some embodiment, the set of segmentized parameters may be selected from the operating dataset comprising a history of driving environment trajectory. In some embodiment, the set of segmentized parameters may be selected from the operating dataset comprising a history of driving environment fuel consumption rate. In some embodiment, the set of segmentized parameters may be selected from the operating dataset comprising a history of engine load value. In some embodiment, the set of segmentized parameters may be selected from the operating dataset comprising a history of gyroscope rate. In some embodiment, the set of segmentized parameters may be selected from the operating dataset comprising a history of acceleration rate. In some embodiment, the set of segmentized parameters may be selected from the operating dataset comprising a vehicle bus data. In some embodiment, the set of segmentized parameters may be selected from the operating dataset comprising an inertial measurement unit data.

The set of segmentized parameters may be selected from the operator health dataset. In some embodiment, the operator health dataset may comprise a heartrate of the vehicle operator. In some embodiment, the operator health dataset may comprise a breathing rate of the vehicle operator. In some embodiment, the operator health dataset may comprise a body temperature of the vehicle operator. In some embodiment, the operator health dataset may comprise a history of health records of the vehicle operator.

In some embodiment, the processor may be further operable to retrieve and receive the driving scoring report generated from the processor or retrieve and receive the driving scoring report generated from the server. In some embodiment, the processor may be further operable to cause the artificial neural network to operate in a training mode.

In an aspect of this disclosure, a method of generating a driving score report is provided. The method may comprise acquiring, by way of a one or more sensing devices, a collection of sensing dataset acquired within a driving environment and generating, by way of a processor having an artificial neural network, a driving score report. The method may further comprise the collection of sensing dataset acquired within the driving environment for generating a set of segmentized parameters and generating the driving score report in response to the set of segmentized parameters. The driving score report may comprises a driving style score rating and an eco-friendliness score rating.

In some embodiment, the method may further comprise labelling, by way of the processor, a time factor to the set of segmentized parameters.

In some embodiment, the set of segmentized parameters may comprises a vehicle operating dataset. In some embodiment, the set of segmentized parameters may comprises a vehicle operator health dataset.

In some embodiment, in response to the set of segmentized parameters, the method may further comprise executing, by way of the artificial neural network, a training mode for generating a score rating categorised according to driving characteristics associated with a driving style and an eco-friendliness.

In an aspect of this disclosure, a cloud-based data sharing system is provided. The cloud-based data sharing system may comprise a driving environment, a driving score report server, a client device and a wireless communication network in wireless communication with a driving environment, the driving score report server and the client device. The client device may comprise a client module operable to receive one or more inputs from a requestor. The one or more inputs from the requestor defines a data sharing service for the requestor. In response to the one or more inputs received from the requestor, a signal containing the one or more inputs may be wirelessly transmitted to the wireless communication network, where the signal carrying information data containing the data sharing service request comprising a user identifier input by the requestor. The driving score report server may comprises a requestor system, the requestor system may be operable to receive the data sharing service request from the wireless communication network and generate the data sharing service request from the client device. In response to the data sharing service request received by the requestor system, the driving score report server may be operable to retrieve a driving score report stored thereon from a user database associated with the user identifier input by the request, and wirelessly transmit to the wireless communication network the driving score report retrieved to the client device.

Advantageously, the aforesaid aspect of this disclosure allows sharing of driving score report generated by a driving score report system with third party service providers through a wireless communication network.

In some embodiment, the requestor may be a human user. In some embodiment, the requestor may be a service provider. In some embodiment, the service provider may be an insurance policy provider. In some embodiment, the service provider may be a fleet management service provider. In some embodiment, the service provider may be a car rental service provider.

In an aspect of this disclosure, a non-transitory computer-readable medium may be provided. The non-transitory computer-readable medium may include computer executable instructions stored thereon, where executed by a driving score report generating system, performs a method of generating driving score report.

Other objects, features and characteristics, as well as the methods of operation and the functions of the related elements of the structure, the combination of parts and economics of manufacture will become more apparent upon consideration of the following detailed description and appended claims with reference to the accompanying drawings, all of which form a part of this specification. It should be understood that the detailed description and specific examples, while indicating the non-limiting embodiments of the disclosure, are intended for purposes of illustration only and are not intended to limit the scope of the disclosure.

### BRIEF DESCRIPTION OF DRAWINGS

The present disclosure will become more fully understood from the detailed description and the accompanying drawings, wherein:
FIG. 1 shows a driving score rating system in accordance with this disclosure.
FIG. 2 shows a flowchart illustrating a method of generating a driving score report in accordance with this disclosure.
FIG. 3 shows a table of sensing information for a driving score rating system in accordance with this disclosure.
FIG. 4 shows an exemplary artificial neural network in accordance with this disclosure.
FIG.5 shows an operating environment of a cloud-based data sharing system in accordance with this disclosure.

### DETAILED DESCRIPTION OF EMBODIMENT

It should be understood that like reference numerals identify corresponding or similar elements throughout the several drawings. It should be understood that although a particular component arrangement is disclosed and illustrated in these exemplary embodiments, other arrangements could also benefit from the teachings of this disclosure.

Hereinafter, the term "wearable" and/or "wearables" may refer to wearable technology, for example a smartwatch, wearable medical monitors, skin patch or smart tattoos comprising flexible electronic components operable to acquire health information associated with a wearer, of which the health information may include body temperature, heat rate, but not limited thereto.

### System 100

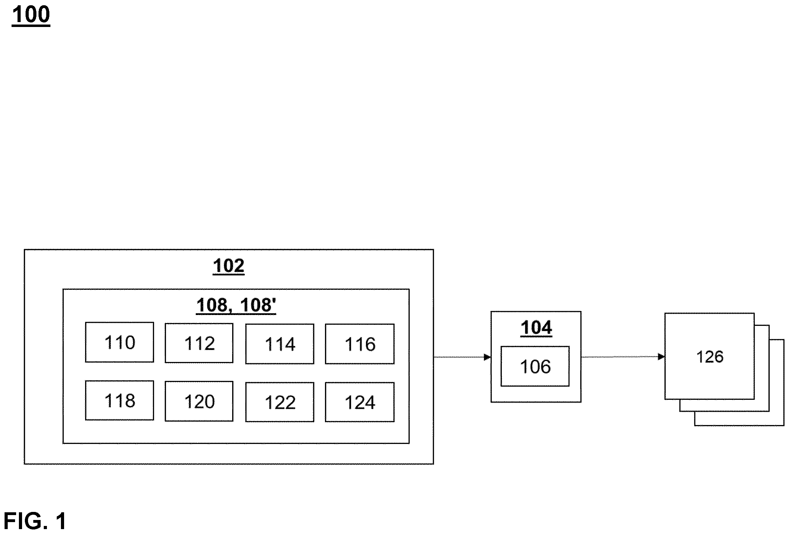

FIG. 1 of the accompanying drawings shows a driving score rating system 100 in accordance with this disclosure. The driving score rating system 100 may include driving environment 102. In some embodiment, the driving environment 102 may be a motor vehicle. In some embodiment, the driving environment 102 may be a driving simulator. The driving environment 102 may include one or more sensing devices 108, 108' operable to acquiring a collection of sensing information. Suitable types of sensing devices 108, 108' may include sensors operable to acquire information related to vehicle operations or vehicle data and heath dataset related to an operator of the driving environment 102. Suitable types of sensing device 108, 108' may include inertial measurement unit (IMU) sensor 110, engine load sensor 112, accelerometer 116, autonomous driving system 118, in-vehicle monitoring system 120 and wearables 124, but not limited thereto. Other types of sensing devices suitable for acquiring information related to vehicle operations, vehicle data and/or health data may also be applicable.

The driving environment 102 may further comprises a processor 104 having an artificial neural network (ANN) 106. An example of such a processor 104 may be an artificial intelligence (AI) processing unit also known as Al PU or AI system on chip also known as Al SoC. The processor 104 may be operable to receive sensing information from the one or more sensing devices 108, 108' and generate a driving score report 126 in response to the sensing information received from the one or more sensing devices. The driving score report 126 may comprise a driving style score rating and an eco-friendliness score rating.

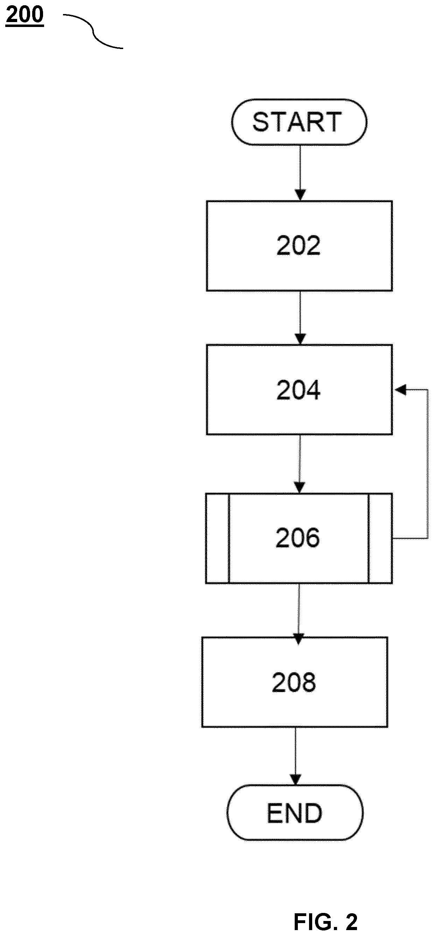

In some embodiment, the ANN may be trained to categorise the sensing information acquired from the sensing devices 108, 108'. A suitable type of ANN for categorisation of information acquired could be convolution neural network (CNN) architecture 200 as shown in FIG. 2. It shall be understood by a skilled practitioner other types of neural network architectures operable to classify or categorize information may be applicable.

### Method 200

FIG. 2 shows a flowchart illustrating a method 200 of generating a driving score report in accordance with this disclosure. In step 202, a collection of sensing dataset may be acquired within a driving environment, by way of one or more sensing devices.

In step 204, a driving score report may be generated using a processor having an artificial neural network. The method 200 may further include at step 206, classifying the collection of sensing dataset acquired within the driving environment for generating a set of segmentized parameters by the processor. The driving score report may be generated in response to the set of segmentized parameters. To yield the set of segmentized parameters, a set of instructions may be stored in a memory (not shown) of the processor to execute an information processing algorithm. Optionally, pre-processing of the dataset acquired may be required, for example removing duplicated data or null data, of which this pre-processing step may be known as data cleaning to a practitioner skilled in the art of data processing or data analysis.

In a step 206, the processor may execute classifying the collection of sensing dataset acquired within the driving environment for generating a set of segmentized parameters. In response to the set of segmentized parameters, a driving score report comprising a driving style score rating and an eco-friendliness score rated is generated, as explained in step 204.

The set of segmentized parameters may labelled with a time factor in a next step 208, by way of the processor, to achieve information processing. In some embodiment, the step of 208 for labelling of time factor may include labelling dataset for example, by 500msec / 1 second in each row. In some embodiment, the step of 208 for labelling of time factor may further include labelling time windows of 2 seconds. In some embodiment, the step of 208 for labelling of time factor may execute both time factors labelling, to yield accuracy of information processing results.

In some embodiments, the set of segmentized parameters may comprises a vehicle operating dataset acquired from sensing devices operable to receive vehicle operating sensing information. In some embodiments, the set of segmentized parameters may comprises a vehicle operating dataset acquired from sensing devices operable to receive health dataset associated with an operator operating in the driving environment.

The set of segmentized parameters may be stored in the memory of the processor and retrievable by the processor when required to generate the driving score report.

In some embodiments, the information processing algorithm may be executed by the artificial neural network through implementation of machine learning. The artificial neural network may execute a training mode using the set of segmentized parameters for generating a scoring rating categorised according to driving characteristics associated with a driving style and an eco-friendliness. The training mode may be based upon supervised learning algorithms and models for generating an accurate score of the operator's driving style based on a ranking of 1 to 10, 1 being the lowest rank and 10 being the highest rank. Similar ranking mode may be applied to eco-friendliness rating score, where 1 to 10, 1 being the lowest rank and 10 being the highest rank.

The Al training model used for executing the training mode may process dataset acquired from vehicle operation when an operator is operating in a driving environment, for example driving speed, revolutions per minute (rpm), engine load, fuel consumption, mass air flow (MAF) sensors, gyroscope sensor and accelerometer, for determining vehicle operation such as how fast is the operator driving in the driving environment, how frequently is the braking system being activated, a rate of fuel consumption which correlates to speed of driving, and so forth. In some embodiment, personal wearables may be applicable to acquire health data associated with the operator, for example a heart rate, temperature of the operator, etc for determining a mood of the operator. By way of an example, when the operator is operating the driving environment at a high speed, the heart rate information acquired may have a higher frequency.

In some embodiment, collection of sensing dataset may further include vehicle sub-systems such as navigation system and autonomous driving systems for determining driving trajectory, for ascertaining how fast the operator is operating the driving environment.

A driving score rate may then be allocated, for example a low ranking score of 1 may indicate the operator's driving style is rash and the eco-friendliness rating has a low ranking score as well, say between 1 to 3.

On a similar note, if dataset fuel consumption rate is consistent or normalised, the driving style may be considered economical and hence the driving style rating may be average, for example a score rating of 5 and the eco-friendliness rating has a score of 5. In some embodiment, the eco-friendliness rating score may be correlated to the driving style rating, for example using fuel consumption rate and predictable carbon dioxide emission in response to fuel consumption rate of the driving environment based on the operator's driving style.

The Al dataset for executing training mode may consist of several columns including vehicle speed, acceleration rate and frequency of acceleration, deceleration rate and frequency of deceleration, yaw of vehicle and so forth, all of which are sensing information required to determine motion of the driving environment, for example sudden change of direction, steering movement, braking and accelerating of driving environment, etc to stimulate driving style of operator. In some embodiment, each row may be represented by a time factor, for example a second-by-second snapshot of driving data collected by the one or more sensing devices or a sensing information acquisition system. For each row scores based on traditional algorithms and expert will be updated e.g., driving, braking, acceleration etc. Additionally, this is blocked into segments and the scores are calculated for each segment.

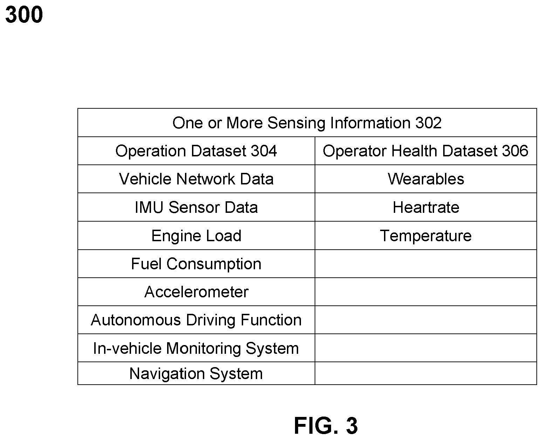

As shown on FIG. 3 is a table of sensing information for a driving score rating system in accordance with this disclosure. The operation dataset 302 may include vehicle operation data in relation to the driving environment, for example vehicle network data, IMU sensor data, engine load data, fuel consumption data, accelerometer data, autonomous driving function data, in-vehicle monitoring data, navigation system data and so forth. The operator health dataset 306 may include sensing information from wearables and more in particular heart rate and temperate as described above.

Turning back to system 100 as shown on FIG. 1, the one or more sensing information 302 acquired by the processor 104 may comprise an operation dataset 304 and operator health dataset 306. As mentioned above, the sensing information acquired may be processed to yield a set of segmentized parameters.

In some embodiment, the set of segmentized parameters may include a history of driving environment trajectory. In some embodiment, the set of segmentized parameters may include a history of driving environment fuel consumption rate. In some embodiment, the set of segmentized parameters may include a history of engine load value. In some embodiment, the set of segmentized parameters may include a history of gyroscope rate. In some embodiment, the set of segmentized parameters may include a history of acceleration rate. In some embodiment, the set of segmentized parameters may include a vehicle bus data. In some embodiment, the set of segmentized parameters may include an inertial measurement unit data.

In some embodiment, the set of segmentized parameters may include a heartrate of the vehicle operator. In some embodiment, the set of segmentized parameters may include a breathing rate of the vehicle operator. In some embodiment, the set of segmentized parameters may include a body temperature of the vehicle operator. In some embodiment, the set of segmentized parameters may include a history of health records of the vehicle operator.

### ANN Architecture 400

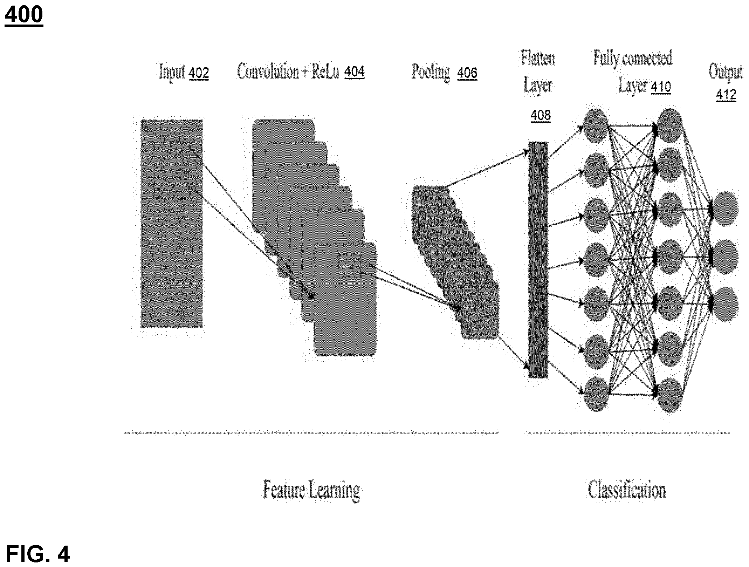

As explained above, a possible type of ANN may be convolutional neural network (CNN) or any other types of ANN which enables classification of information for machine learning purposes. As can be observed from FIG. 4 of the accompanying drawings which shows an exemplary artificial neural network in accordance with this disclosure, the ANN architecture 400 may include feature learning layers which may comprise an input layer 402 comprising neurons for bringing the initial data or dataset into the system for further processing by subsequent layers. In the next feature learning layer, the ANN architecture 400 may include convolution and rectifier or rectified linear unit (ReLu) layer 404, using a mathematical model to pass on results to successive layers. Beneficially, the ReLu is an activation function that introduces the property of non-linearity to a machine learning model or a deep learning model to address missing gradient issue.

The pooling layer 406 is operable to reduce the number of parameters for learning and the amount of computation required in the neural network is reduced by summarizing the features generated by the previous layer, i.e. the convolution and rectifier layer 404.

Under the classification layers, the flatten layer 408 may collapse a spatial dimension of the input from previous layer, pooling layer 406. Following the collapsed spatial dimension of the data, the processed information from the pooling layer 406 goes through a fully connected layer 410, where all the inputs from a layer are connected to every activation unit of the next layer, to compile the data extracted from previous layers to form the final output. The output layer 412 is the last layer of neurons that produces given outputs for the program, i.e. for generating the output results. In some embodiment, the output results may be the segmentized parameters which may be used for further training of the ANN. In some embodiments, the output results may be the driving score report 126 comprising a driving style score rating and an eco-friendliness score rating as disclosed herein.

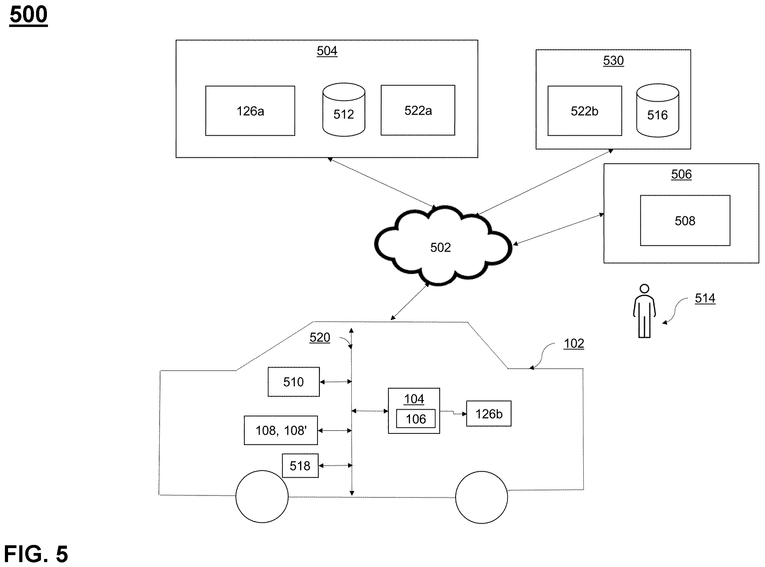

FIG.5 shows an operating environment 500 of a cloud-based data sharing system in accordance with this disclosure. The operating environment 500 which includes a wireless communication network 502, a driver score report server 504 and a driving environment 102. In some embodiment, the driving environment 102 is a motor vehicle. In some embodiment, the driving environment 102 is a driving simulator.

The operating environment 500 may include a client device 506 comprising a client module 508 operable to receive one or more inputs from a requestor 514. The requestor 514 may be a human, for example a vehicle operator or a service provider such as a customer service representative. The one or more inputs from the requestor 514 defines a data sharing service request for the requestor 514. In response to the one or more inputs received by the requestor 514, a signal carrying information data is wirelessly transmitted to the wireless communication network 502 containing the data sharing service request. The data sharing service request may further include a user identifier input by the requestor 514. The user identifier input may contain information for identifying a user or an operator of driving environment 102, such that driving score report generated may be retrieved.

The driving score report server 504 may comprise a requestor system 522a, the requestor system 522a may be operable to receive the data sharing service request from the wireless communication network 502 and generate the data sharing service request from the client device 506. In response to the data sharing service request received by the requestor system 522a, the driving score report server 504 may be operable to retrieve a driving score report stored thereon from a user database 512 associated with the user identifier input by the requestor 514 and wirelessly transmit to the wireless communication network 502 the driving score report retrieved to the client device 506.

In some embodiment, the service provider may be an insurance policy provider. In some embodiment, the service provider may be a fleet management service provider. In some embodiment, the service provider may be a car rental service provider. In embodiments involving service provider(s), the operating environment 500 may comprise a third-party data sharing server 530 having a memory 516 for storing and retrieving a history of requests and a requestor system 522b. The third-party data sharing server 530 may be operable to wirelessly transmit signals carrying information data through the wireless communication network 502 to retrieve driving score rating reports 126a stored in the driving score report server 504.

In some embodiment, the client device 506 may be a display panel 518 in the driving environment 102. In some embodiment, the client device 506 may be a mobile communication device such as a smartphone, a tablet, a personal digital assistant, a laptop, a desktop computer connected to the wireless communication network 502.

In some embodiments where the driving environment 102 is a motor vehicle, the driving score report 126b generated may be wirelessly transmitted to the driving score report server 504. In some embodiments where the driving environment 102 is a motor vehicle, the driving score report 126b generated may be displayed on a display panel 518 shown to the operator. In some embodiments where the driving environment 102 is a motor vehicle, the driving score report 126b generated may be wirelessly transmitted to the driving score report server 504 through the wireless communication network 502 through a communication module 510 onboard the motor vehicle. A suitable communication module 510 may be a telematics unit or an antenna. In some embodiments where the driving environment 102 is a motor vehicle, sensing information acquired from one or more sensing devices 108, 108' may be transmitted to the processor 104 through a vehicle bus network 520.

A main advantage of this disclosure is the use of driving score reports for data sharing with service providers, for example, a car rental service provider or an insurance provider, to provide competitive pricing to a member or consumer using driving style rating and eco-friendliness rating as a determining factor.

The foregoing description shall be interpreted as illustrative and not be limited thereto. One of ordinary skill in the art would understand that certain modifications may come within the scope of this disclosure. Although the different non-limiting embodiments are illustrated as having specific components or steps, the embodiments of this disclosure are not limited to those combinations. Some of the components or features from any of the non-limiting embodiments may be used in combination with features or components from any of the other non-limiting embodiments. For these reasons, the appended claims should be studied to determine the true scope and content of this disclosure.

List of Reference Signs
- 100: Driving Score Report Generating System
- 102: Driving environment
- 104: Processor
- 106: Artificial neural network (ANN)
- 108: One or more sensing devices
- 110: Inertial measurement unit (IMU) sensor
- 112: Engine load sensor
- 114: Fuel consumption sensor
- 116: Accelerometer
- 118: Autonomous driving function
- 120: In-vehicle monitoring system
- 122: Navigation system
- 124: Wearables
- 126, 126a, 126b: Driving score report
- 200: Flowchart
- 202: Acquiring a collection of sensing dataset within driving environment
- 204: Generating driving score report using processor having ANN
- 206: Classifying the collection of sensing dataset acquired within the driving environment for generating a set of segmentized parameters
- 208: labelling of time factor
- 300: Table
- 302: Types of one or more sensing information
- 304: Operation dataset
- 306: Operator health dataset
- 400: ANN architecture
- 402: Input
- 404: CNN + ReLu layer
- 406: Pooling
- 408: Flattening layer
- 410: Fully connected layer
- 412: Output
- 500: Operating environment
- 502: Wireless communication network
- 504: Driving score server
- 506: Client device
- 508: Client module
- 510: Communication module
- 512: Human user profile database
- 514: Requestor
- 516: 3^{rd} party request
- 518: Display panel
- 520: Vehicle bus network
- 522a, 522b: Requestor system

## Claims

1. A driving score report generating system (100) comprising:
a driving environment (102);
one or more sensing devices (108, 108') within the driving environment (102);
and
a processor (104) comprising an artificial neural network (106), the processor (104) operable to generate and execute a plurality of instructions stored thereon,
**characterised in that** the processor (104) is further operable:
to receive sensing information (302) from the one or more sensing devices (108, 108');
and
to generate a driving score report (126, 126a, 126b) in response to the sensing information (302) received from the one or more sensing devices (108, 108'),
wherein the driving score report (126, 126a, 126b) comprises:
• a driving style score rating;
and
• an eco-friendliness score rating.

2. The system (100) according to claim 1, **characterised in that**
the processor (104) is operable to transmit an information data containing the driving score report (126) to a driving score report server (504) through a wireless communication network (502), wherein the driving score report server (504) is operable:
to store the information data containing the driving score report (126, 126a, 126b) received through the wireless communication network (502);
and
to retrieve the information data containing the driving score report (126, 126a, 126b) in response to one or more input by a requestor (514).

3. The system (514) according to claim 1, **characterised in that** the sensing information acquired by the processor (104) comprises:
an operation dataset (304) comprising vehicle operation data in relation to the driving environment (102);
an operator health dataset (306) comprising health data in relation to an operator operating in the driving environment (102),
or combination thereof.

4. The system (100) according to claim 1 - 2, **characterised in that**
the processor (104) is further operable to execute the plurality of instructions to cause the artificial neural network (106) to perform a machine learning process to obtain a set of segmentized parameters for processing the driving scoring driving style score rating and the eco-friendliness score rating.

5. The system (100) according to claims 1 - 3, **characterised in that** the set of segmentized parameters is selected from the operating dataset (304) comprising:
• a history of driving environment trajectory;
• a history of driving environment fuel consumption rate;
• a history of engine load value;
• a history of gyroscope rate;
• a history of acceleration rate;
• a vehicle bus data;
• an inertial measurement unit data;
or combination thereof.

6. The system (100) according to claims 1 - 3, **characterised in that**
the set of segmentized parameters is selected from the operator health dataset (306) comprising:
• a heartrate of the vehicle operator;
• a breathing rate of the vehicle operator;
• a body temperature of the vehicle operator;
• a history of health records of the vehicle operator;
or combination thereof.

7. The system (100) according to any of the preceding claims, **characterised in that** the processor (104) is further operable to:
• retrieve and receive the driving scoring report (126, 126a, 126b) generated from the processor (104) or retrieve and receive the driving scoring report (126, 126a, 126b) generated from the driving score report server (504);
and
• cause the artificial neural network (106) to operate in a training mode.

8. A method (200) of generating a driving score report (126, 126a, 126b), the method (200) comprising:
acquiring (202), by way of a one or more sensing devices (108, 108'), a collection of sensing dataset (302) acquired within a driving environment (102);
generating (204), by way of a processor (104) having an artificial neural network (106), a driving score report (126, 126a, 126b),
**characterised by** that the method (200) further comprises:
classifying (206), by way of the processor (104), the collection of sensing dataset acquired within the driving environment (102) for generating a set of segmentized parameters;
and
generating the driving score report (126, 126a, 126b) in response to the set of segmentized parameters, the driving score report (126, 126a, 126b) comprising:
a driving style score rating;
and
an eco-friendliness score rating.

9. The method (200) according to claim 8, **characterised by** that the method further comprises:
labelling, by way of the processor, a time factor to the set of segmentized parameters.

10. The method according to claims 8 - 9, **characterised by** that the set of segmentized parameters comprises:
• a vehicle operating dataset (304);
• a vehicle operator health dataset (304),
or combination thereof.

11. The method according to claims 8 -10, **characterised by** that the method further comprises:
in response to the set of segmentized parameters.
executing, by way of the artificial neural network (106), a training mode for generating a score rating categorised according to driving characteristics associated with
• a driving style;
and
• an eco-friendliness.

12. A cloud-based data sharing system (500) comprising:
a driving environment (102);
a driving score report server (504);
a client device (506);
and
a wireless communication network (502) in wireless communication with a driving environment (102), the driving score report server (504) and the client device (506);
wherein the client device (506) comprises a client module (508) operable to:
receive one or more inputs from a requestor (514), the one or more inputs from the requestor (514) defines a data sharing service for the request; and
in response to the one or more inputs received from the requestor (514), wirelessly transmit to the wireless communication network (502):
the data sharing service request comprising a user identifier input;
wherein the driving score report server (504) comprises a requestor system (522a, 522b), the requestor system (522a, 522b) operable to:
receive the data sharing service request from the wireless communication network (502) and generate the data sharing service request from the client device (506);
and
in response to the data sharing service request received by the requestor system (522a, 522b),
the driving score report server (504) is operable to retrieve a driving score report (126a) stored thereon from a user database (512) associated with the user identifier;
and
wirelessly transmit to the wireless communication network (502) the driving score report (126, 126a, 126b) retrieved to the client device (506).

13. The data sharing system (500) according to claim 12, **characterised in that** the requestor (514) is:
• a human user;
• a service provider,
or combination thereof.

14. The data sharing system (500) according to claim 13, **characterised in that** the service provider is selected from a group consisting of:
• an insurance policy provider;
• a fleet management service provider;
• a car rental service provider
and combination thereof.

15. A non-transitory computer-readable medium (104) with computer executable instructions stored thereon executed by a driving score report (126, 126a, 126b) generating system (100), for performing a method (200) of generating driving score report (126, 126a, 126b).
